# EUROPÄISCHE PATENTANMELDUNG

(11) **EP 3 698 619 A1**
(43) Veröffentlichungstag der Anmeldung: **26.08.2020**
(21) Anmeldenummer: 19158321.0
(22) Anmeldetag: 20.02.2019
(51) Int. Cl.: A01D 34/00, A01D 34/73

(54) **MESSEREINSATZSYSTEM FÜR EINEN RASENMÄHER**

(71) Anmelder: Deere & Company, Moline, IL 61265 (US)
(72) Erfinder: Majewski, Sebastian, 68163 Mannheim (DE)
(74) Vertreter: Lavall, Christian Henner

(57) **Zusammenfassung**

Messereinsatzsystem (10) für einen Rasenmäher, mit einem Messereinsatz (12) für einen Rasenmäher mit einer zentrale Befestigung (14) zum Anbringen an einen Rasenmäher, wobei der Messereinsatz (12) eine zentrale Achse aufweist (16), um welche sich der Messereinsatz (12) im Betrieb drehen kann, und eine erste Längsachse (18), an der sich ein erster Abschnitt des Messereinsatzes in einer ersten Längsrichtung quer zur zentralen Achse erstreckt, und wenigstens einem Flügelelement (28) zur Befestigung an einem äußeren Bereich des Messereinsatzes.

## Beschreibung

Die Erfindung betrifft ein Messereinsatzsystem für Rasenmäher, sowie einen Messereinsatz und ein Flügelelement für ein Messereinsatzsystem.

Messereinsätze, auch Messerbalken genannt, werden in Rasenmähern verwendet. Sie stellen die eigentliche Schnittfunktion her, indem diese durch einen motorischen Antrieb im Rasenmäher zur Rotation gebracht werden, wodurch an ausgebildeten Schnittkanten das Gras geschnitten wird.

Durch Generierung von Auftrieb durch den Messereinsatz kann der Grasschnitt qualitativ verbessert werden. Ebenso findet eine größere Verwirbelung des geschnittenen Materials in der Arbeitskammer statt, wodurch eine weitere Zerkleinerung des Materials ermöglicht wird.

US2004098960 zeigt einen Messereinsatz mit einem Flügelprofil. Dabei ist auf den Messereinsatz durch eine Beschichtung ein Flügelprofil aufgebracht.

US5148660 beschreibt einen Schutz für den Messereinsatz. Dieser wird in Form einer Beschichtung mit Polyurethan aufgebracht und schützt vor Steinschlag oder Verschleiß.

US2005183411 zeigt eine Beschichtung des Messereinsatzes mit Polyurethan über eine gesamte Länge.

US2015047308 beschreibt einen Messereinsatz mit einem ausgeformten Flügelprofil aus Metall, das einstückig sein kann oder angeschweißt ist.

Derart geformte Messereinsätze weisen einen einstückigen Flügelabschnitt auf. Durch die Ausbildung weist der Messereinsatz ein hohes Gewicht auf und ist aufwändig in der Herstellung. Durch das erhöhte Gewicht wird der Antriebsstrang stärkeren Belastungen ausgesetzt.

Es soll ein Messereinsatz zur Verfügung gestellt werden, der die angesprochenen Probleme überwindet und einen Einsatz in Rasenmähern ermöglicht.

Eine Ausbildung der Erfindung betrifft einen Messereinsatz für einen Rasenmäher, der eine zentrale Befestigung zum Anbringen an einen Rasenmäher aufweist, wobei der Messereinsatz eine zentrale Achse aufweist, um welche sich der Messereinsatz im Betrieb drehen kann, und eine erste Längsachse, an der sich ein erster Abschnitt des Messereinsatzes in einer ersten Längsrichtung quer zur zentralen Achse erstreckt, und eine zweite Längsachse, an der sich ein zweiter Abschnitt des Messereinsatzes quer zur zentralen Achse und in einem Winkel zur ersten Längsachse erstreckt, mit wenigstens einer erste Schneidkante zum Schneiden von Gras an einer Seite des ersten Abschnitts, die in Richtung einer Rotation des Messereinsatzes liegt, wenigstens eine zweite Schneidkante zum Schneiden von Gras, an einer Seite des zweiten Abschnitts, die in Richtung der Rotation des Messereinsatzes liegt, wobei die erste Schneidkante im Betrieb des Messereinsatzes auf einer anderen Ebene rotiert als die zweite Schneidkante, und die erste Schneidkante im Betrieb durch die Rotation der zweiten Schneidkante vorauseilt, und auf dem ersten Abschnitt wenigstens eine Zentrierung und wenigstens eine Befestigung für das Anbringen eines Flügelelements vorgesehen sind.

Der vorgeschlagene Messereinsatz hat somit auf zwei Ebenen wenigstens eine Schneide, die Gras zerkleinert. Diese ist geeignet für die Befestigung von Flügelelementen, die aus einem nicht-metallischen Material hergestellt sind. Hierdurch wird eine Gewichtsreduktion ermöglicht, so dass eine geringere Last am Antriebsstrang anliegt. Weiterhin wird eine mögliche Unwucht durch die Flügelelemente reduziert, und der Herstellungsaufwand des Messereinsatzes durch den Entfall von Flügelabschnitten wird niedriger, wobei gleichzeitig die Schnittleistung erhöht werden kann. Durch die zweite Schneidkante, die der ersten nachfolgt und auf einer anderen Ebene rotiert, wird zunächst das Gras bodenseitig abgeschnitten und dann nochmals zerkleinert. Mit Hilfe der Flügelelemente wird eine aufwärtsgerichtete, vom Boden wegleitende, Strömung erzeugt, die zum einen das geschnittene Gras an die zweite Schneidkante leitet und das noch ungeschnittene Gras aufrichtet und so zu einem verbesserten Schnittbild führt.

Eine weitere Ausbildung der Erfindung betrifft einen Messereinsatz für einen Rasenmäher, der eine zentrale Befestigung aufweist, zum Anbringen an einen Rasenmäher, wobei der Messereinsatz eine zentrale Achse aufweist, um welche sich der Messereinsatz im Betrieb drehen kann, und eine erste Längsachse, an der sich der Messereinsatz in einer ersten Längsrichtung quer zur zentralen Achse (16) erstreckt, und wenigstens eine erste Schneidkante zum Schneiden von Gras an einer Seite des Messereinsatzes, die in Richtung einer Rotation des Messereinsatzes liegt, wobei auf dem Messereinsatz wenigstens eine Zentrierung und wenigstens eine Befestigung für das Anbringen eines Flügelelements vorgesehen sind.

Der Messereinsatz weist eine flache Körperform aus, indem dieser eine Längsachse aufweist, wobei an seinen Enden die Flügelelemente befestigt werden können. Durch die Verwendung und die Eignung, Flügelelemente an den Enden aus einem nicht-metallischen Material befestigen zu können, wird das Gesamtgewicht reduziert. Die Flügelelemente können ein geringes Eigengewicht aufweisen, so dass die Belastung des Antriebsstrangs gesenkt werden kann. Die befestigbaren Flügelelemente führen zu einer Luftströmung, die das abgeschnittene Gras verwirbelt, so dass ein weiterer Schneidvorgang durch den Messereinsatz ermöglicht wird.

Eine Weiterbildung ist Messereinsatz bei dem die zweite Schneidkante im Betrieb auf einer höheren Ebene rotiert als die erste Schneidkante.

Das geschnittene Gras wird dabei vom Boden aufwärts geleitet, durch die zweite Schneidkante erfasst und weiter zerkleinert. Hierbei kann ein Mulchen ermöglicht werden, wobei das zerkleinerte Gras auf der gemähten Fläche verbleiben kann. Auf einen Auffangbehälter kann dabei verzichtet werden. Aufgrund der weiteren Zerkleinerung kann auch mehr Schnittgut im Auffangbehälter untergebracht werden.

Eine Weiterbildung beschreibt einen Messereinsatz, bei dem die erste und zweite Schneidkante am Ende des ersten und/oder zweiten Abschnitts ausgebildet ist.

Im Bereich der äußeren Enden wird eine höhere Winkelgeschwindigkeit der Schneidkante erreicht. Die Schnittleistung ist durch die höhere Winkelgeschwindigkeit gesteigert, wodurch eine höhere Mähleistung des Messereinsatzes ermöglicht wird.

Eine Weiterbildung betrifft einen Messereinsatz, bei welchem der zweite Abschnitt derart ausgebildet ist, dass er im Bereich nahe der zentralen Befestigung horizontal verläuft, in einem mittleren Bereich einen Anstieg hat, und im Bereich der zweiten Schneidkante horizontal verläuft, wenn der Messereinsatz montiert ist.

Der Messereinsatz kann einstückig gefertigt werden. Aufgrund des Verlaufs des zweiten Abschnitts kann die zweite Schneidkante über der ersten Schneidkante positioniert werden, wenn der Messereinsatz in Betrieb ist. Durch den Verlauf des zweiten Abschnitts kann eine großflächige Beeinflussung der Strömung ermöglicht werden, wodurch das geschnittene Gras verwirbelt wird, so dass es weiter zerkleinert werden kann.

Einer weitere Erfindung betrifft ein Flügelelement zur Befestigung an einem Messereinsatz für einen Rasenmäher, zur Erzeugung einer Strömung, das einen Befestigungsabschnitt aufweist, zum Befestigen und Zentrieren an einem Messereinsatz mit einem Flügelabschnitt, der sich von dem Befestigungsabschnitt unter einem Winkel über die gesamte Breite des Flügelelements erstreckt.

Das Flügelelement erzeugt durch den Flügelabschnitt und den ansteigenden Winkel eine Luftströmung, die das ungeschnittene Gras aufrichtet, so dass ein besseres Schnittbild gewährleistet ist. Weiterhin wird durch das geschnittene Gras durch die Flügelelemente aufgewirbelt und kann durch die folgenden Rotationen des Messereinsatzes weiter zerkleinert werden. Die Flügelelemente können als separate Bauteile am Messereinsatz angebracht werden, so dass diese aus einem anderen Material, vorzugweise aus einem nicht-metallischen Material, bestehen können. Da Material ist somit leichter und führt zu einer geringeren Belastung des Antriebs, einer geringeren Unwucht, zu einem geringeren Gewicht des gesamten Rasenmähers und zu einem leichteren Arbeiten für das Bedienpersonal.

Eine weitere Ausführung beschreibt ein Flügelelement, bei welchem der Befestigungsabschnitt eine Zentrierung aufweist, in Form von wenigstens zwei vorstehenden Laschen, die vom Befestigungsabschnitt vorstehen, und der Befestigungsabschnitt wenigstens eine Bohrung für eine Schraubverbindung aufweist.

Die Laschen können dabei mit Rastnasen versehen sein. Vorzugsweise können die Flügelelemente bei dieser Variante aus einem Kunststoff oder Polymer gefertigt sein. Dabei weisen die Laschen eine gewisse Flexibilität auf und können mittels Rastnasen im Messereinsatz befestigt werden. Mit Hilfe der Schraubverbindung ist das Flügelelement sicher am Messereinsatz gehalten. Dadurch wird das Flügelelement austauschbar am Messereinsatz gehalten und kann im Falle von Beschädigungen durch Lösen der Schraubverbindung gewechselt werden, ohne dabei den Messereinsatz zu wechseln.

Eine Weiterbildung betrifft ein Flügelelement, bei welchem der Befestigungsabschnitt wenigstens zwei Schraubdome aufweist, die vom Befestigungsabschnitt vorstehen.

Die Schraubdome passen vorzugsweise in passende Bohrungen am Messereinsatz. Durch die Schraubdome kann das Flügelelement am Messereinsatz befestigt und zentriert werden. Das Flügelelement kann durch Lösen der Schraubverbindungen gewechselt werden, ohne den Messereinsatz zu wechseln.

Eine weitere Ausbildung betrifft ein Flügelelement, bei dem die Schraubdome eine runde oder eine eckige Form haben.

Mit Hilfe der Außenkontur der Schraubdome kann eine Zentrierung realisiert werden. Es kann sich um viereckige oder ovale Formen handeln.

Eine Weiterbildung beschreibt ein Flügelelement, bei welchem zwischen dem Befestigungsabschnitt und dem Flügelabschnitt ein Spalt ausgebildet ist, geeignet, um einen Messereinsatz zu umgreifen, und eine Bohrung für eine Schraubverbindung.

Das Flügelelement kann am Messereinsatz durch Einschieben in den Spalt befestigt werden. Dabei kann der Spalt durch eine einseitig offene Struktur des Flügelelements oder durch eine innenliegende Öffnung ausgebildet sein. Das Flügelelement kann eine Anlagekante aufweisen, an der das Flügelelement im montierten Zustand am Messereinsatz an- und aufliegt und so ein Gegenlager bildet. Mit Hilfe der Schraubverbindung wird das Flügelelement am Messereinsatz befestigt. Hierdurch ist das Flügelelement austauschbar am Messereinsatz gehalten.

Eine weitere Ausführung beschreibt ein Flügelelement, das einen Halteabschnitt aufweist, der vom Befestigungsabschnitt beabstandet und mit diesem durch einen Steg verbunden ist, so dass zwischen dem Halteabschnitt und dem Befestigungsabschnitt ein Spalt ausgebildet ist, der geeignet ist, einen Messereinsatz zu umgreifen, und eine Bohrung für eine Schraubverbindung.

Mit dem vorgelagerten Halteabschnitt und dem verbindenden Steg kann das Flügelelement auf den Messereinsatz am freien Ende aufgeschoben werden. Dadurch wird das Flügelelement auf dem Messereinsatz zunächst durch die beidseitigen Flächen am Halteelement und am Befestigungselement am Messereinsatz befestigt und mittels der Schraubverbindung fixiert. Das Halteelement kann ausgetauscht werden.

Eine Weiterbildung betrifft ein Flügelelement, das derart ausgelegt ist, dass es im Betrieb an einem Messereinsatzeine Luftströmung auf die zweite Schneidkante erzeugt.

Die Luftströmung sorgt dafür, dass das geschnittene Gras verwirbelt wird und auf die zweite Schneidkante geleitet wird, die das Gras weiter zerkleinert. Der Vorgang kann sich mehrmals wiederholten und die Zerkleinerung wird verbessert. Zusätzlich kann die Strömung für eine gute Leitung des Schnittgutes in einen Auffangbehälter sorgen, so dass dieser eine hohe Verdichtungsrate aufweist. Wenn das Schnittgut auf dem Boden verbleibt, etwa beim Mulchen, sorgt die hohe Zerkleinerungsrate für eine schnellere Zersetzung und eine gleichmäßige Verteilung.

Eine weitere Erfindung betrifft Messereinsatzsystem für einen Rasenmäher, das einen Messereinsatz aufweist, mit wenigstens einem Flügelelement zur Befestigung an einem äußeren Bereich des Messereinsatzes, mit einem Befestigungsabschnitt zur Zentrierung und Befestigung am Messereinsatz.

Das Messereinsatzsystem verwendet einen Messereinsatz mit einem separaten Flügelelement, das am Messereinsatz befestigt wird. Durch das Flügelelement wird eine Luftströmung erzeugt, die das Gras zum einen vor dem Schnitt aufrichtet und anschließend weiter verwirbelt, um die weitere Zerkleinerung durch den Messereinsatz zu verbessern und zu unterstützen. Die Flügelelemente können dabei aus einem nicht-metallischen Material hergestellt sein, wodurch eine Gewichtsersparnis erzielt wird. Aufgrund der geringeren Masse wird die Belastung am Antrieb reduziert und eine Unwucht vermieden. Das Gesamtgewicht des Messereinsatzsystems wird reduziert, so dass die Bedienung des Rasenmähers, etwa bei Anschieben erleichtert wird. Die Flügelelemente können ausgetauscht werden, so dass die Funktion jederzeit sichergestellt sein kann.

Die Erfindung wird anhand der folgenden Abbildungen weiter beschreiben. Dabei zeigt
Figur 1 eine erste Ausbildung des Messereinsatzes mit Flügelelementen;
Figur 2 eine zweite Ausbildung des Messereinsatzes mit Flügelelementen;
Figur 3 eine dritte Ausbildung des Messereinsatzes mit Flügelelementen;
Figur 4 eine vierte Ausbildung des Messereinsatzes mit Flügelelementen;
Figur 5 eine fünfte Ausbildung des Messereinsatzes mit Flügelelementen.

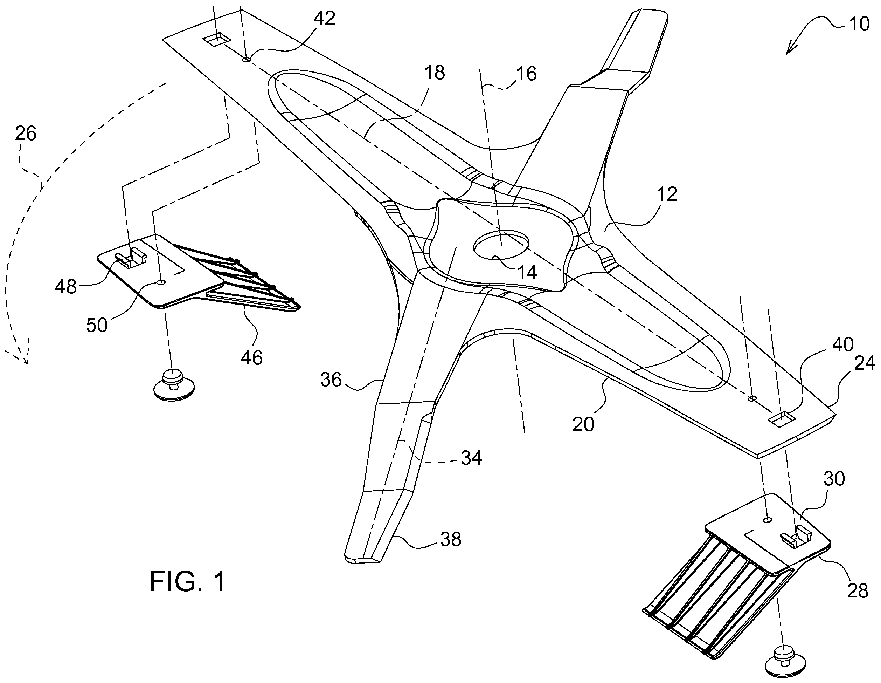

**Figur 1** zeigt einen Messereinsatzsystem 10 mit einem Messereinsatz 12 und Flügelelementen 28. Der Messereinsatz 12 weist eine erste Längsachse 18 auf, entlang der sich ein erster Abschnitt 20 des Messereinsatzes 12 erstreckt. Der Messereinsatz 12 hat eine zentrale Öffnung in Form einer zentralen Befestigung 14, die dazu dient, den Messereinsatz 12 an einem Rasenmäher zu befestigen und gleichzeitig anzutreiben. Der Messereinsatz 12 weist eine zweite Längsachse 34 auf, die in einem Winkel zur ersten Längsachse 18 verläuft. Entlang der zweiten Längsachse 34 erstreckt sich ein zweiter Abschnitt 36 des Messereinsatzes 12. Der Messereinsatz 12 ist dabei einstückig ausgeformt und vorzugsweise aus einem metallischen Werkstoff hergestellt. Der erste und der zweite Abschnitt 36 weisen eine Vorderseite und eine Rückseite auf, wobei die Vorderseite jeweils in Richtung der Rotation 26 des Messereinsatzes 12 im Betrieb liegt.

Die Rückseite liegt entsprechend auf der Rotationsabgewandten Seite des Messereinsatzes 12. Auf der Vorderseite der Abschnitte ist jeweils wenigstens eine Schneidkante vorgesehen, die zum Schneiden von Gras dient. Der erste Abschnitt 20 weist eine erste Schneidkante 24 auf, der zweite Abschnitt 36 entsprechend eine zweite Schneidkante 38. An den äußeren Enden der ersten Abschnitte 20 weist der Messereinsatz 12 eine Zentrierung 40 und eine Befestigung für die Flügelelemente 28 auf. Die Zentrierung 40 hat die Form einer rechteckigen Öffnung um entsprechende Laschen 48 an den Flügelelementen 28 aufzunehmen. Die Befestigung ist eine Bohrung 50 mit einem Gewinde zur Aufnahme und Fixierung einer Schraubverbindung zum Fixieren der Flügelelemente 28.

Die Flügelelemente 28 werden an den äußeren Enden des Messereinsatzes 12 angebracht. Diese weisen einen Befestigungsabschnitt 30 auf, der eine Befestigung in Form eine Bohrung 50 zur Aufnahme einer Schraube hat und eine Zentrierung 40, die in Form von zwei Laschen 48 mit einer Rastnase ausgebildet ist. Die Laschen 48 durchgreifen die entsprechende Öffnung am Messereinsatz 12 und verrasten mit den Rastnasen. Hierdurch ist das Flügelelement 28 positioniert und wird durch die Verschraubung sicher gehalten. Dabei kann das Flügelelement 28 jederzeit ausgetauscht werden, etwa bei Beschädigung durch Steine oder andere Hindernisse. Die Flügelelemente 28 sind so ausgerichtet, dass diese im montieren Zustand des Messereinsatzsystems 10 auf der Oberseite des Messereinsatzes 12, vom Boden entfernt angebracht sind. Dadurch wird eine vom Boden weg gerichtete Strömung erzeugt, die Gras vor dem Schneidvorgang aufrichtet und so die Schnittqualität verbessert. Durch die Strömung wird das abgeschnittene Gras gleichzeitig länger in der Luft gehalten und kann so mehrmals vom rotierenden Messereinsatz 12 weiter zerkleinert werden. Die Flügelelemente 28 weisen außerdem einen Flügelabschnitt 46 auf, der sich vom Messereinsatz 12 weg erstreckt und unter einem Winkel zum Befestigungsabschnitt 30 ausgebildet ist. Dabei kann auf einer Rückseite des Flügelabschnitts 46 eine Verstärkung der Struktur in Form von Rippen vorgesehen sein.

Der zweite Abschnitt 36 ist in einem Winkel zum ersten Abschnitt 20 ausgebildet. In einem zentralen Bereich, um die zentrale Befestigung 14, die als Öffnung ausgeführt ist, weist der zweite Abschnitt 36 entlang der zweiten Längsachse 34 einen ebenen Verlauf zum ersten Abschnitt 20 auf. In einem mittleren Bereich ändert sich der radiale Verlauf und weist nach oben, im montierten Zustand am Rasenmäher, und erstreckt sich dadurch auf eine andere Ebene als der erste Bereich, der einen ebenen Verlauf aufweist. Im äußeren Bereich knickt der zweite Abschnitt 36 erneut ab und geht in einen horizontalen Verlauf, wiederrum im Montagezustand am Rasenmäher gesehen, ab. Die zweite Schneidkante 38 befindet sich in diesem äußeren horizontalen Segment, so dass die zweite Schneidkante 38 auf einer höheren Ebene liegt als die erste Schneidkante 24. Aufgrund des Winkels zwischen der ersten und zweiten Längsachse 34 folgt die zweite Schneidkante 38 der ersten nach, wenn der Messereinsatz 12 im Betrieb ist.

Der Verlauf des ersten und des zweiten Abschnitts 36 kann hierbei weitere Abwinklungen aufweisen, solange sichergestellt ist, dass die erste und zweite Schneidkante 38 auf unterschiedlichen Ebenen liegen und die zweite Schneidkante 38 der ersten nachfolgt.

Die Flügelelemente 28 und der Flügelabschnitt 46 dienen zur Ausbildung einer Luftströmung, die zum einen vom Boden weggerichtet ist und gleichzeitig auf die zweite Schneidkante 38 zuleiten.

Im Betrieb wird durch die erste Schneidkante 24 das Gras zunächst vom Boden abgeschnitten. Durch die Rotation 26 im Betrieb des Messereinsatzes 12 erzeugen die Flügelelemente 28 einen vom Boden aufwärts gerichteten Sog, der das abgeschnittene Gras nach oben leitet und auf die zweite Schneidkante 38 zuleitet. Diese durchtrennt die aufgewirbelten Grashalme weiter so dass diese zerkleinert werden. Durch die Flügelelemente 28 wird dadurch eine Verbesserung der Zerkleinerungsleistung erreicht.

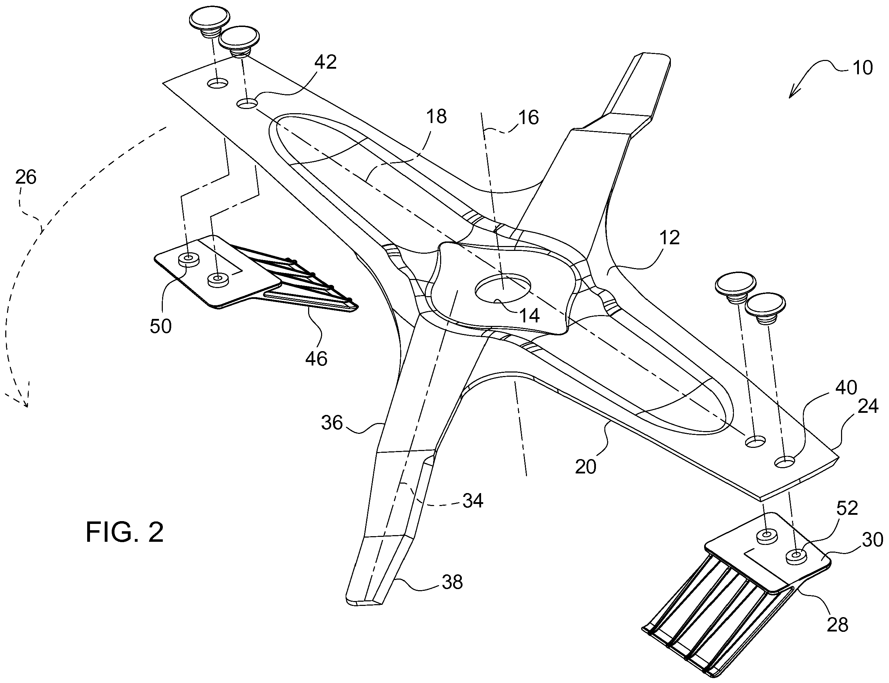

**Figur 2** zeigt eine andere Befestigung der Flügelelemente 28, wobei der Messereinsatz 12 identisch zur Figur 1 ist, so dass für diesen auf die Beschreibung zu Figur 1 verwiesen wird.

Die Flügelelemente 28 weisen am Befestigungsabschnitt 30 Schraubdome 52 auf, die in passende Öffnungen am Messereinsatz 12 eingefügt werden. Dadurch ist die Zentrierung und Fixierung der Flügelelemente 28 am Messereinsatz 12 sichergestellt. Die Schraubdome 52 können auch andere Formen haben, wie etwa eine eckige oder ovale Außenkontur, sowie die entsprechenden Öffnungen am Messereinsatz 12.

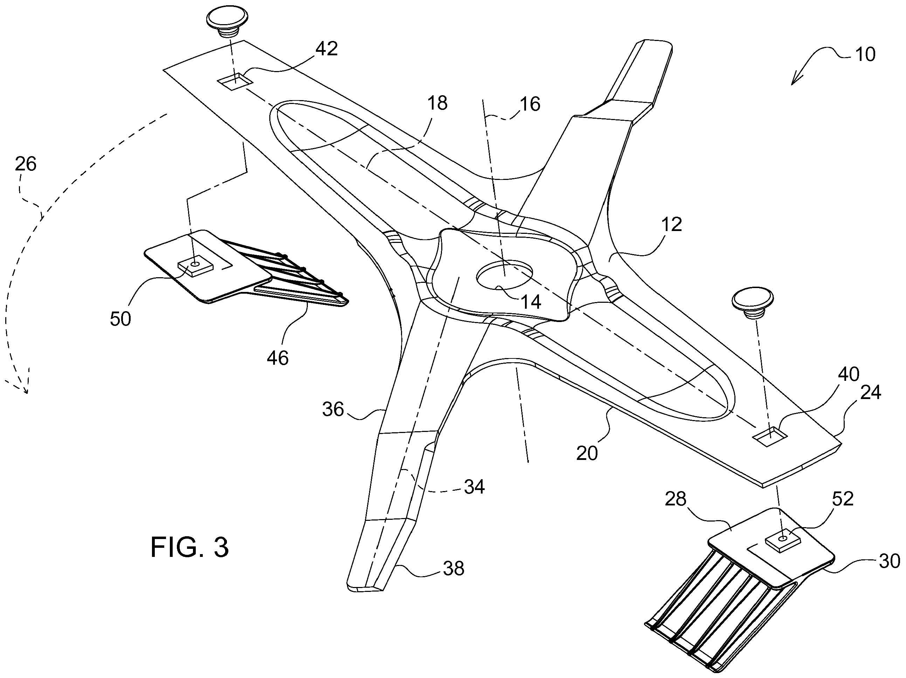

**Figur 3** zeigt eine andere Befestigung der Flügelelemente 28, wobei der Messereinsatz 12 identisch zur Figur 1 ist, so dass für diesen auf die Beschreibung zu Figur 1 verwiesen wird.

Die Schraubdome 52 weisen eine viereckige Außenkontur auf, die in passende Öffnungen am Messereinsatz 12 eingefügt und verschraubt werden. Durch die eckige Form ist eine fehlerhafte Montage ausgeschlossen und die Flügelelemente 28 können sicher positioniert werden.

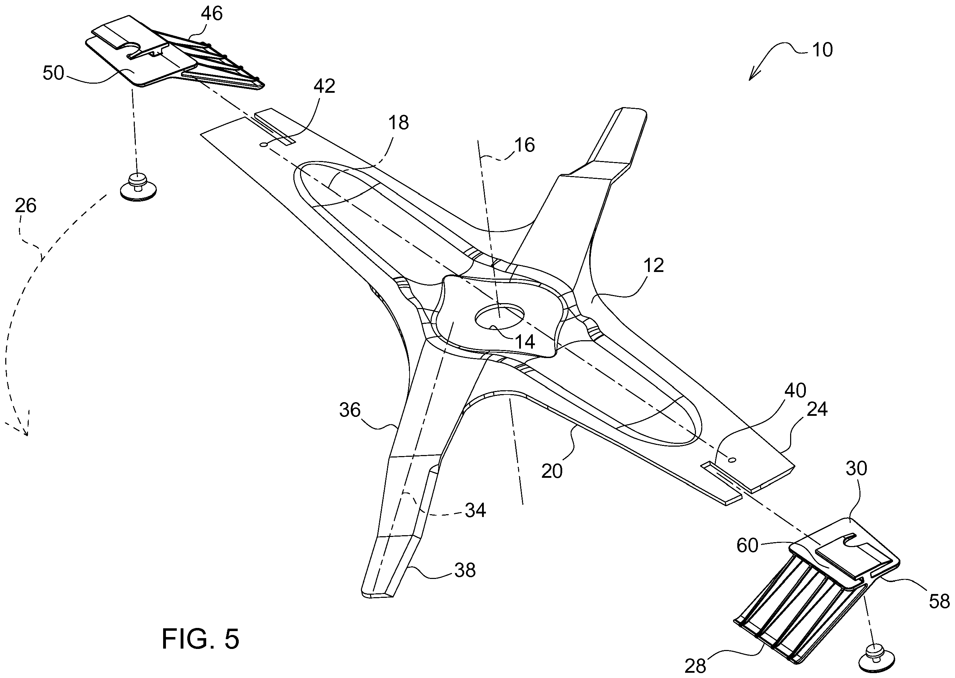

**Figur 5** zeigt eine andere Befestigung der Flügelelemente 28, wobei der Messereinsatz 12 identisch zur Figur 1 ist, so dass für diesen auf die Beschreibung zu Figur 1 verwiesen wird.

Das Flügelelement 28 weist zusätzlich zum Befestigungsabschnitt 30 einen davon parallel beabstandeten Halteabschnitt 56 auf. Dieser ist mit dem Befestigungsabschnitt 30 durch einen Steg 58 verbunden, wodurch ein Spalt 60 zwischen dem Halte- und dem Befestigungsabschnitt 30 gebildet wird. Der Halteabschnitt 56 kann eine Aussparung aufweisen, durch die eine Schraube zur Öffnung im Befestigungsabschnitt 30 geführt werden kann. Der Messereinsatz 12 weist entsprechend eine einseitige schlitzartige Öffnung am äußeren Ende auf, in die das Flügelelement 28 mit dem Steg 58 eingeschoben werden kann. Dadurch ist das Flügelelement 28 mit dem Halte- und Befestigungselement und dem Steg 58 am Messereinsatz 12 gehalten. Durch die Schraubverbindung wird das Flügelelement 28 am Messereinsatz 12 fixiert. Ein Austausch ist durch das Lösen der Schraubverbindung und das Herausziehen des Flügelelements 28 möglich.

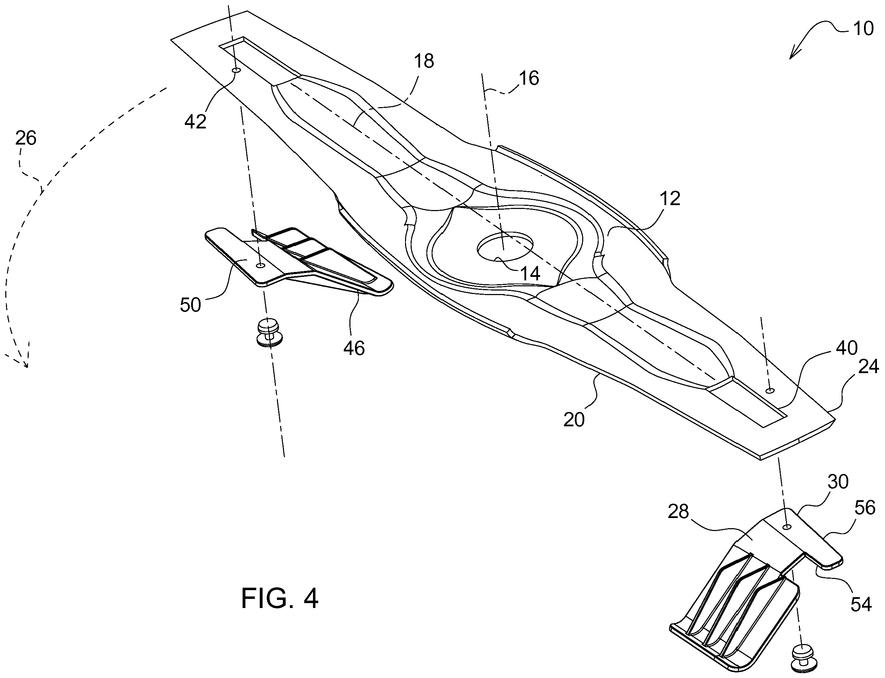

**Figur 4** beschreibt einen Messereinsatz 12, der im Vergleich zu den vorangestellten Ausführungen aus lediglich einem ersten Abschnitt 20 entlang einer ersten Längsachse 18 besteht. Die weitere Ausbildung ist, bis auf die Befestigung des Flügelelements 28, identisch mit den restlichen Figuren.

Der Messereinsatz 12 weist an seinem äußeren Ende des ersten Abschnitts 20 eine Ausnehmung auf, in die das Flügelelement 28 eingesteckt werden kann. Das Flügelelement 28 weist hierfür einen gewinkelten Aufbau mit einer Anlagekante auf. Dadurch wird am Flügelelement 28 ein Spalt 54 bereitgestellt, in dem der Messerbalken aufgenommen und geklemmt wird. Durch das Einstecken und Anlegen des Flügelelements 28 im Messereinsatz 12 wird diese in der Ausnehmung verkeilt und positioniert. Dabei kommt eine Schraubbohrung 50 am Befestigungsabschnitt 30 des Flügelelements 28 zur Anlage an der Bohrung 50 des Messereinsatzes 12, so dass das Flügelelement 28 durch eine Schraubverbindung gesichert werden kann. Es können auch mehrere Verschraubungen vorgesehen sein.

## Patentansprüche

1. Messereinsatz (12) für einen Rasenmäher, aufweisend
eine zentrale Befestigung (14) zum Anbringen an einen Rasenmäher
wobei der Messereinsatz (12) eine zentrale Achse (16) aufweist, um welche sich der Messereinsatz (12) im Betrieb drehen kann, und
eine erste Längsachse (18), an der sich ein erster Abschnitt (20) des Messereinsatzes (12) in einer ersten Längsrichtung (22) quer zur zentralen Achse (16) erstreckt, und eine zweite Längsachse (34), an der sich ein zweiter Abschnitt (36) des Messereinsatzes (12) quer zur zentralen Achse (16) und in einem Winkel zur ersten Längsachse (18) erstreckt,
wenigstens eine erste Schneidkante (24) zum Schneiden von Gras an einer Seite des ersten Abschnitts (20), die in Richtung einer Rotation (26) des Messereinsatzes (12) liegt
wenigstens eine zweite Schneidkante (38) zum Schneiden von Gras, an einer Seite des zweiten Abschnitts (36), die in Richtung der Rotation (26) des Messereinsatzes (12) liegt,
wobei die erste Schneidkante (24) im Betrieb des Messereinsatzes (12) auf einer anderen Ebene rotiert als die zweite Schneidkante (38), und
die erste Schneidkante (24) im Betrieb durch die Rotation (26) der zweiten Schneidkante (38) vorauseilt, und
auf dem ersten Abschnitt (20) wenigstens eine Zentrierung (40) und wenigstens eine Befestigung (42) für das Anbringen eines Flügelelements (28) vorgesehen sind.

2. Messereinsatz (12) für einen Rasenmäher, aufweisend
eine zentrale Befestigung (14) zum Anbringen an einen Rasenmäher,
wobei der Messereinsatz (12) eine zentrale Achse (16) aufweist, um welche sich der Messereinsatz (12) im Betrieb drehen kann, und
eine erste Längsachse (18), an der sich der Messereinsatz (12) in einer ersten Längsrichtung (22) quer zur zentralen Achse (16) erstreckt, und
wenigstens eine erste Schneidkante (24) zum Schneiden von Gras an einer Seite des Messereinsatzes (12), die in Richtung einer Rotation (26) des Messereinsatzes (12) liegt,
wobei auf dem Messereinsatz (12) wenigstens eine Zentrierung (40) und wenigstens eine Befestigung (42) für das Anbringen eines Flügelelements (28) vorgesehen sind.

3. Messereinsatz (12) nach Anspruch 1, **dadurch gekennzeichnet, dass** die zweite Schneidkante (38) im Betrieb auf einer höheren Ebene rotiert als die erste Schneidkante (24).

4. Messereinsatz (12) nach einem der vorangehenden Ansprüche, **dadurch gekennzeichnet, dass** die erste (24) und zweite Schneidkante (38) am Ende des ersten und/oder zweiten Abschnitts (36) ausgebildet ist.

5. Messereinsatz (12) nach Anspruch 1, 3 oder 4, wobei der zweite Abschnitt (36) derart ausgebildet ist, dass er im Bereich nahe der zentralen Befestigung (14) horizontal verläuft, in einem mittleren Bereich einen Anstieg hat, und im Bereich der zweiten Schneidkante (38) horizontal verläuft, wenn der Messereinsatz (12) montiert ist.

6. Flügelelement (28) zur Befestigung an einem Messereinsatz (12) für einen Rasenmäher, zur Erzeugung einer Strömung, aufweisend
einen Befestigungsabschnitt (44), zum Befestigen und Zentrieren an einem Messereinsatz (12),
einen Flügelabschnitt (46), der sich von dem Befestigungsabschnitt (44) unter einem Winkel über die gesamte Breite des Flügelelements (28) erstreckt.

7. Flügelelement (28) nach Anspruch 6, **dadurch gekennzeichnet, dass** der Befestigungsabschnitt (44) eine Zentrierung (40) aufweist, in Form von wenigstens zwei vorstehenden Laschen (48), die vom Befestigungsabschnitt (44) vorstehen, und der Befestigungsabschnitt (44) wenigstens eine Bohrung (50) für eine Schraubverbindung aufweist.

8. Flügelelement (28) nach Anspruch 6, **dadurch gekennzeichnet, dass** der Befestigungsabschnitt (44) wenigstens zwei Schraubdome aufweist, die vom Befestigungsabschnitt (44) vorstehen.

9. Flügelelement (28) nach Anspruch 8, **dadurch gekennzeichnet, dass** die Schraubdome eine runde oder eine eckige Form haben.

10. Flügelelement (28) nach Anspruch 6, **dadurch gekennzeichnet, dass** zwischen dem Befestigungsabschnitt (44) und dem Flügelabschnitt (46) ein Spalt ausgebildet ist, geeignet, um einen Messereinsatz (12) zu umgreifen, und eine Bohrung (50) für eine Schraubverbindung.

11. Flügelelement (28) nach Anspruch 6, **gekennzeichnet durch** einen Halteabschnitt (56), der vom Befestigungsabschnitt (44) beabstandet und mit diesem durch einen Steg (58) verbunden ist, so dass zwischen dem Halteabschnitt (56) und dem Befestigungsabschnitt (44) ein Spalt (60) ausgebildet ist, der geeignet ist, einen Messereinsatz (12) zu umgreifen, und eine Bohrung (50) für eine Schraubverbindung.

12. Flügelelement (28) nach einem der Ansprüche 6 bis 11, **dadurch gekennzeichnet, dass** das Flügelelement (28) derart ausgelegt ist, dass es im Betrieb an einem Messereinsatz (12) eine Luftströmung auf die zweite Schneidkante (38) erzeugt.

13. Messereinsatzsystem (10) für einen Rasenmäher, aufweisend
einen Messereinsatz (12) nach einem der Ansprüche 1 bis 5,
mit wenigstens einem Flügelelement (28) zur Befestigung an einem äußeren Bereich des Messereinsatzes (12),
mit einem Befestigungsabschnitt (44) zur Zentrierung und Befestigung am Messereinsatz (12).
